# EUROPEAN PATENT SPECIFICATION

(11) **EP 1 260 346 B1**
(45) Date of publication and mention of the grant of the patent: **25.05.2011**
(21) Application number: 02011592.9
(22) Date of filing: 27.05.2002
(51) Int. Cl.: B29C 47/10, B29C 47/76, B29C 47/40, C08J 3/00, C08L 67/02

(54) **Method for extruding polymer blend resin**
Verfahren zum Extrudieren eines Polymerharzgemisches
Procédé d'extrusion de compositions de polymères

(30) Priority: 25.05.2001 JP 2001157952
(43) Date of publication of application: 27.11.2002
(73) Proprietor: TOYO SEIKAN KAISHA LIMITED, Tokyo (JP)
(72) Inventor: Ichikawa, Kentarou, Yokohama-shi, Kanagawa-ken (JP); Funagi, Yuuji, Yokohama-shi, Kanagawa-ken (JP); Kobayashi, Akira, Yokohama-shi, Kanagawa-ken (JP); Satou, Kazuhiro, Yokohama-shi, Kanagawa-ken (JP); Morofuji, Akihiko, Yokohama-shi, Kanagawa-ken (JP)
(74) Representative: Vossius & Partner

(56) References cited:
- EP-A- 0 340 655
- EP-A- 0 517 171
- WO-A-91/19767
- WO-A-94/06864
- DE-A- 2 212 329
- GB-A- 1 537 240
- JP-A- 09 066 556
- US-A- 4 303 573
- US-A- 4 914 152
- US-A- 5 128 404
- PATENT ABSTRACTS OF JAPAN vol. 1995, no. 11, 26 December 1995 (1995-12-26) & JP 07 195617 A (TOYO SEIKAN KAISHA LTD;OTHERS: 01), 1 August 1995 (1995-08-01)

## Description

The present invention relates to a method for blending and extruding resin suitable for manufacturing a lamination film which is used for manufacturing resin-coated metal cans, and more particularly to a method for extruding thermoplastic polymer blend resin suitable for manufacturing a resin-coatedmetal sheet having the excellent workability, the excellent adhesive property, the excellent corrosion resistance and the excellent shock resistance.

Conventionally, with respect to a resin-coated metal can which is produced by draw-forming, deep drawing, bend-elongation working (thinning drawing working), stretch-working or ironing-working, to ensure favorable properties against a content in the can, a can which is produced by laminating an oriented film containing polyethylene terephthalate (PET) to a metal sheet has been popularly used

However, with respect to such a resin-coated metal can which has been produced recent years, to achieve the reduction of manufacturing cost, the can is becoming light-weighted by thinning a can body thereof. Further, along with the thinning of the can body, the resin which is coated on the metal sheet is also required to meet more sophisticated properties with respect to the thin-film workability of the resin per se, the shock resistance which enables the resin to withstand the shock while maintaining the thin film thickness, the adhesive property to the metal sheet, the corrosion resistance against the metal sheet and the like. Accordingly, with respect to the resin-coated film which is laminated to the metal sheet to be coated with resin, the film is laminated to the metal sheet after a cast film is formed using a single screw or twin screw extruder or is directly molded by extrusion and is formed on the metal sheet. Further, as the coated resin, resin which contains polyethylene terephthalate and blends components having other characteristics therein has been used.

In performing the polymer blending with respect to resins, in general, a method which preliminarily blends powdery resins or pellet resins in a solid state and melts and blends the resins using an extruder has been adopted. However, even when the resins which differ in the melting temperature and the softening temperature are preliminarily blended in a solid state and then are fed to the extruder through a material feed port formed at one place and is extruded as polymer blend resin, to completely melt the resin at a high melting point side, it is necessary to set the temperature of the extruder to a temperature suitable for the high melting-point resin.

This gives rise to the degradation of low-melting-point resin components due to excessive heating and decomposition, the degradation of the whole blend resin and the lowering of molecular weight thus leading to the lowering of film performances. These degradation and the lowering of performances due to the low-melting-point resin components derived from the excessive heating become more outstanding when blended pellets are prepared once and thereafter the blended pellets are heated, melted and extruded in a film shape or in a sheet shape using a separate extruder.

On the other hand, when the predetermined temperature of the extruder is lowered to obviate the degradation, there arises a drawback that the high-melting-point resin scatters in the coated film as non-melted substances.

When a resin-coated metal can is formed by drawing, stretching and/or ironing using the resin-coated metal sheet which is produced by coating the resin which suffers from the degradation thereof or the lowering of molecular weight or the resin in which the high-melting-point resin scatters as non-melted substances to the metal sheet, the resin film is liable to suffer from damages during working processes and damaged portions of the film are liable to generate the sensible or the latent exposure of the ground metal thus giving rise to a problem that metal is dissolved or the corrosion is generated.

Further, when the resin-coated metal can is formed by drawing, stretching and/or ironing using the resin-coated metal sheet coated with resin whose molecular weight is excessively lowered and a content is preserved in a state that the content is filled in the can for a long period, there has been a drawback that the corrosion of ground metal is liable to be generated.

The resin film for the resin-coated metal sheet used in the conventional resin-coated metal can has the flavor retentivity, the shock resistance and, particularly, the dent resistance while maintaining the excellent workability and adhesive property to some extent. However, to enable the more sophisticated drawing, deep drawing, stretching or ironing, the above-mentioned defective parts of the resin film still constitute problems to be solved.

WO 91/19767 discloses a semi-crystalline blow moldable polyester composition. A process of making the composition comprises the steps of:
a) feeding PET and at least one ethylene terpolymer to a twin screw extruder, melting the feed material, and subjecting it to degassing under reduced pressure in a first vacuum zone;
b) introducing via a side feeder a mixture of at least one ionomer and at least one polyester other than PET;
c) kneading and mixing of the combined feed materials;
d) subjecting it to degassing under reduced pressure in a second vacuum zone; and
e) mixing and subsequently extruding the blend.

EP-A-340 655 discloses a process for the preparation of mixtures of thermally incompatible polymers, said process comprising:
a) feeding into a first extruder a thermoplastic polymer possessing relatively low processing temperatures;
b) feeding into at least one second extruder at least one thermoplastic polymer possessing relatively high processing temperatures; and
c) feeding the molten polymer of the second extruder into the first extruder at a point near its outlet.

DE-A 2212329 discloses a process of adding fillers and additives to thermoplastic polymers wherein the fillers and additives are added during granulation only after the plastification zone in the region of lower temperature.

Accordingly, it is an object of the present invention to provide a method for extruding polymer blend resin which is capable of satisfying performances which are necessary for a resin-coated metal can even when the resin-coated metal can is produced through an extremely stringent working such as drawing, deep drawing, bend-elongation by drawing, stretching or ironing. That is, it is another object of the present invention to provide a method for extruding polymer blend resin which is suitable for manufacturing a resin-coated metal sheet having the excellent workability, the excellent adhesive property, the excellent

The method for extruding polymer blend resin according to the present invention comprises:
a) in a first zone of a twin screw extruder, feeding thermoplastic resin A to the extruder through a first raw material feed port (5),
   plasticizing the thermoplastic resin A in a molten state, and
   subjecting it to degassing under reduced pressure;
b) in a second zone extending downwardly from the position of degassing under reduced pressure to a second raw material feed port (20), feeding thermoplastic resin B whose melting temperature or softening temperature is lower than a melting temperature or a softening temperature of the thermoplastic resin A to the extruder through a second raw material feed port (20);
c) in a blending zone (Lb), which is located at the end of a third zone extending downwardly from the second raw material feed port (20) to the end of the extruder and which contains a mixing part (14), blending the thermoplastic resin A and the thermoplastic resin B; and
d) extruding the blend resin from the extruder,
wherein, assuming Lb as a length of the blending zone and D as a screw diameter of the extruder, the ratio of Lb/D is 0.5 to 5.0,
wherein, assuming a temperature set in the first zone as T1, a temperature set in the second zone as T2 and a temperature set in the third zone as T3, a relationship T1 ≥ T2 > T3 is established among the temperatures T1, T2 and T3, and
wherein the thermoplastic resin A is a polyester resin and the thermoplastic resin B is an ethylene-based polymer.

The method for extruding the polymer blend resin according to the present invention is also characterized by following features.
1. With respect to a melting point Tm of the thermoplastic resin A, the temperature T1 in the first zone is set to Tm + 20 degree centigrade to Tm+ 50 degree centigrade, the temperature T2 in the second zone is set to Tm - 20 degree centigrade to Tm + 50 degree centigrade, and the temperature T3 in the third zone is set to Tm - 40 degree centigrade to Tm + 10 degree centigrade,
2. After the thermoplastic resin A and the thermoplastic resin B are blended, the blend resin is extruded through a geared pump and a T die.
3. The blending ratio by weight of the thermoplastic resin A and the thermoplastic resin B is set to B/(A + B) = 0.05 to 0.5.
4. The thermoplastic resin A is resin containing polyethylene terephthalate as a major component and the thermoplastic resin B is acid-modified polyethylene resin.
5. An oxidation inhibitor C and/or other component D are added to the polymer blend resin.

FIG. 1 is a schematic view showing the overall constitution of an extrusion device adopted by an embodiment of the present invention.

Fig. 2 is a schematic view showing the cross-sectional structure of an extruder portion having a twin screw extruding ability as shown in Fig. 1.

Fig. 3 is a schematic view showing the structure of the inside of the extruder shown in Fig. 1.

A method for extruding polymer blend resin according to the present invention is explained hereinafter.

According to the present invention, in blending thermoplastic resins which differ in a melting point, that is, the thermoplastic resin A having a high melting point and the thermoplastic resin B having a melting temperature or a softening temperature lower than that of the thermoplastic resin A and thereafter extruding the blend resin using an extruder, the thermoplastic resin A is fed through a first feed port and is sufficiently melted, plasticized and is subjected to degassing under reduced pressure at a high temperature for a long time and, thereafter, the thermoplastic resin B is fed to the extruder through a second feed port formed in a middle portion of the extruder.

The reason that the raw materials are fed by separating the feed ports is as follows. That is, when the resin having a low melting point (low softening point) contained in the blended raw material is exposed to high temperature for a long time at the time of melting and plasticising, the resin is liable to suffer from chars, degradation, decomposition of molecules and the like thus giving rise to defects in a film after extrusion. Accordingly, it is not preferable to feed thermoplastic resins which differ in melting point through the same feed port. To cope with such a situation, according to the present invention, the different feed ports are used depending on the melting points of feeding materials, wherein the resin A having a high melting point is fed through the first feed port and the resin B having a melting point or a softening point lower than that of the resin A is fed through the second feed port. Thereafter, the resin materials which differ in a melting temperature or a softening point (also referred to as "melting point" in the present invention) are respectively melted at temperatures suitable for respective resins and then these resins are mixed or blended. Accordingly, it is possible to produce a resin film extruded from a T die which has no defects.

Here, when the temperature difference between the melting point or the softening point of the resin B and the melting point of the resin A is substantially less than 100 degree centigrade, it is not always necessary to separate the feed ports for materials. To the contrary, it is not preferable to perform the extrusion under the conditions set according to the present invention by feeding the resin B which has no temperature difference with respect to the resin A through the second raw material feed port since the extrusion brings about the insufficient melting and the insufficient mixing of the resin B.

According to the present invention the relationship among a temperature T1 set in a first zone which feeds and degasses thermoplastic resin A under reduced pressure, a temperature T2 set in a second zone extending downwardly from a position of degassing under reduced pressure to the second raw material feed port and a temperature T3 set in a third zone extending downwardly from the second raw material feed port is set to T1 ≥ T2 > T3. Particularly, it is preferable with respect to the melting point Tm of the thermoplastic resin A, the temperature T1 in the first zone is set to a temperature range of Tm + 20 degree centigrade to Tm + 50 degree centigrade, the temperature T2 in the second zone is set to a temperature range of Tm - 20 degree centigrade to Tm + 50 degree centigrade, and the temperature T3 in the third zone is set to a temperature of Tm - 40 degree centigrade to Tm + 10 degree centigrade.

When the temperature T1 in the first zone is less than Tm + 20 degree centigrade, the resin A cannot be sufficiently melted and plasticized thus leading to the generation of non-melted substances in the film. On the other hand, when the temperature T1 in the first zone exceeds Tm+ 50 degree centigrade, this gives rise to the lowering of molecular weight and hence, this temperature setting is not preferable.

On the other hand, by setting the temperature T2 in the second zone to Tm - 20 degree centigrade to Tm + 50 degree centigrade such that the relationship T1 ≥ T2 is established, the temperature of the resin A which is once melted can be suppressed so that the viscosity of the resin A is adjusted to a proper value thus enabling the ensuing favorable mixing of the resin A with the resin B.

Further, when the temperature T3 in the third zone is belowTm- 40 degree centigrade or exceeds Tm+10 degree centigrade, the favorable mixed state cannot be obtained. Particularly, when the temperature T3 in the third zone exceeds Tm + 10 degree centigrade, degraded substances are liable to be generated in the film and hence, this temperature setting is not desirable.

After the thermoplastic resin A and the thermoplastic resin B are blended, the blend resin is directly extruded in a desired film shape or in a desired sheet shape through a geared pump and a T die. By adopting such a constitution, it is possible to control the blending condition based on a pre-pump pressure of the geared pump which is connected to the extruder at the downstream of the extruder. Further, since the resin is directly extruded from the T die after blending and is formed into a desired film or sheet, the lowering of molecular weight and the generation of degraded substances can be suppressed.

### [Ratio of the thermoplastic resin A and the thermoplastic resin B]

It is preferable that the relationship in quantity between the thermoplastic resin A component and the thermoplastic resin B component is set to B/(A + B) = 0.05 to 0.5 when expressed by the weight ratio. That is, it is preferable that the relationship falls in a range of 5 to 50 % by weight. It is more preferable that the relationship falls in a range of 10 to 30 % by weight. It is still more preferable that the relationship falls in a range of 15 to 25 % by weight.

When the thermoplastic resin B component is excessively large, a volatile component in the thermoplastic resin composition is increased and the thermal degradation of the thermoplastic resin B component progresses and hence, this weight ratio is not desirable. On the other hand, the scattering structure of thermoplastic resin B in the thermoplastic resin A does not exhibit a so-called island structure and hence, this quantative relationship is not preferable to enhance the shock resistance.

On the other hand, when the thermoplastic resin B component is excessively small, there arises a problem that a sufficient shock resistance enhancing effect given to the thermoplastic resin A cannot be obtained. Accordingly, this quantative relationship is not preferable.

In the present invention the thermoplastic resin A is a polyester resin and the thermoplastic resin B is an ethylene-based polymer. This selection of materials is explained in detail hereinafter.

### [Thermoplastic resin A: polyester resin]

As polyester resin, e.g polyethylene terephthalate, polyethylene terephthalate/isophthalate (PET/IA) and polybutylene terephthalate can be used.

With respect to polyethylene terephthalate/isophthalate (PET/IA), it is preferable to use the PET/IA in which diol component mainly consists of ethylene glycol and dibasic acid component mainly consists of terephthalic acid and contains 3 to 25 mol % of isophthalic acid from a viewpoint of control of the crystallization characteristics of coating and assurance of the adhesive property between the coating resin and the substrate metal sheet.

Further, the thermoplastic resin A may contain, as extrinsic components, dibasic acids such as P-β-oxyethoxy benzoic acid, naphthalene 2-6-dicarboxylic acid, diphenoxyethane-4,4,-dicarboxylic acid, 5-sodium sulfo isophthalic acid, hexa hydro terephthalic acid, adipic acid, sebacic acid, dimer acid, trimellitic acid and pyromellitic acid and glycol components such as propylene glycol, 1,4-butandiol, neopentyl glycol, 1,6-hyxylene glycol, diethylene glycol, triethylene glycol, cyclohexane dicarboxylic acid, bisphenol A ethylene oxide appendage, glycerol, trimethylol propane, pentaerythritol and dipentaerythritol in a small quantity.

Although the PET/IA can be manufactured by a conventional known manufacturing method such as a melt polycondensation method, it is particularly preferable to use the PET/IA obtained by a solid state polymerization method. In the solid state polymerization method, polyethylene terephthalate of low degree of polymerization is once synthesized by the melt polycondensation method and, thereafter, is solidified by cooling and is granulated or pulverized and then is heated at a temperature of 220 to 250 degree centigrade in vacuum or under the flow of an inert gas so as to obtain the PET-IA. In this method, since the reaction is performed at a relatively low temperature, the thermal decomposition is small and the carboxylic acid content is drastically decreased corresponding to the increase of the polycondensation so that the PET/IA of high degree of polymerization which exhibits the high intrinsic viscosity (IV value) can be obtained.

In view of the barrier property against corrosion components and the mechanical properties, it is preferable that the polyester has the intrinsic viscosity which is measured using a phenol/tetrachloroethane mixed solvent at a value not less than 0.7, particularly in a range of 0.8 to 1.2.

Further, it is preferable that the polyester resin used has an average molecular weight of in a range of 40,000 to 100,000, particularly in a range of 50,000 to 80,000 at the low material stage. When the raw material having the low average molecular weight is used, it is difficult for the polyester resin portion, in particular, in the polymer blend resin after extrusion to ensure the average molecular weight necessary for maintaining the shock resistance. Further, when the average molecular weight exceeds either the upper limit or the lower limit of this range, the blending of the polyester resin and the thermoplastic resin B cannot be performed preferably and hence, such setting of the average molecular weight is not preferable.

Further, it is preferable to set a glass transition point to not less than 40 degree centigrade, particularly not less than 50 degree centigrade in view of the prevention of the elution of oligomer components into the content.

### (Thermoplastic resin B: ethylene-based polymer)

As the ethylene-based polymer, for example, low-density, intermediate-density or high-density polyethylene, linear low-density polyethylene, linear ultra-low-density polyethylene, ethylene-propylene copolymer, ethylene-propylene-butene-1 copolymer, ethylene-vinyl acetate copolymerion cross-link olefin copolymer(ionomer), ethylene-1 butene copolymer and ethylene-acrylic ester copolymer can be used. That is, one kind of these materials or the blended material made of two or more kinds of these materials can be used as the ethylene-based polymer.

The thermoplastic resin B which has the melting temperature or the softening temperature lower that that of the thermoplastic resin A is finely scattered into the thermoplastic resin A and has a function of enhancing the shock resistance of the thermoplastic resin A. As the shock resistance which is requested by a canned product which hermetically seals a content in a resin coated metal can, there exists the dent resistance. The dent resistance is the property which requires the resin-coated can to completelymaintain the adhesive property of coating even when an indentation is formed on a vessel due to a fall of the canned product. By blending the thermoplastic resin B into the thermoplastic resin A, it is possible to give the sufficient dent resistance to the canned product.

As the viscosity of the thermoplastic resin B, it is preferable to set the value of MFR (Melt Flow Rate) prescribed in accordance with JIS to a range of 1 to 20, more preferably to a range of 0.5 to 10 to obtain the favorable dispersion state due to the viscosity balance between the thermoplastic resin A and the thermoplastic resin B.

Among the above-mentioned ethylene-based polymer, ionomer which is an ionic salt having a portion or the whole of the carboxylic radical in copolymer formed of ethylene and α,β-unsaturated carboxylic acid neutralized by metal cation has the favorable dispersion property with PET. Accordingly, it is preferable to blend the ionomer with PET so as to enhance the shock resistance of the resin-coated film.

Here, ionomer is the general term of high-molecular weight compound having the ionic cross-link coupling and usually is cross-link polymer obtained by the ion coupling between olefin carboxylic acid copolymer and metal. Ionomer is also served for enhancing the adhesive property and the heat sealing property.

With respect to the ionomer used in the present invention, as α, β unsaturated carboxylic acid which constitutes ionomer resin, unsaturated carboxylic acid having the carbon number of 3 to 8 can be named. To be more specific, acrylic acid, methacrylic acid, maleic acid, itaconic acid, maleic acid anhydride and maleic acid monomethy ester are named.

As particularly preferable base polymer, ethylene - (metha) acrylic acid copolymer, ethylene-(metha) acrylic acid ester -(metha) acrylic acid copolymer can be named.

Further, as metal ion which neutralizes the carboxylic radical in the copolymer of ethylene and α,β-unsaturated carboxylic acid, Na⁺, K⁺, Li⁺, Zn⁺, Zn²⁺, Mg²⁺, Ca²⁺, Co²⁺, Ni²⁺, Mn²⁺, Pb²⁺ and Cu²⁺ are named. Further, a portion of the residual carboxylic radical which is not neutralized by metal ion may be esterificated with low-class alcohol.

According to the present invention, it is preferable to add an oxidation inhibitor C into the thermoplastic resin B.

### [Oxidation inhibitor C]

As the oxidation inhibitor C used in the present invention, tocopherol (vitamin E) and novolac resin are named. Further, a sulfide-based radical inhibitor, a phenol-based radical inhibitor, a phosphorous-based radical inhibitor and a nitrogen-based radical inhibitor can be also used as the oxidation inhibitor.

Since the oxidation inhibitor C has a function of suppressing the degradation by oxidation and the decomposition of the above-mentioned thermoplastic resin A and thermoplastic resin B, a function of suppressing the generation of degraded substances and chars and a function of attenuating the lowering of molecules of the thermoplastic resin A, it is preferable to add the oxidation inhibitor C into the thermoplastic resin B.

It is preferable that an addition amount of the oxidation inhibitor C falls in a range of 0.05 to 5 weight % of a total amount (A+B+C) of the polymer blend resin. It is more preferable that the addition amount of the oxidation inhibitor C falls in a range of 0.1 to 2.0 weight % of the total amount (A+B+C) of the polymer blend resin. It is still more preferable that the addition amount of the oxidation inhibitor C falls in a range of 0.3 to 1.0 weight % of the total amount (A+B+C) of the polymer blend resin.

When the addition amount is less than 0.05 weight %, the function or the effect to suppress the degradation by oxidation and decomposition of resin becomes insufficient and the generation of the degraded substances becomes apparent and hence, such an addition amount is not preferable. On the other hand, when the addition amount exceeds 5 weight %, it gives rise to the elution of content and hence, such an addition amount is also not preferable.

The oxidation inhibitor C may be preliminarily blended into the thermoplastic resin B or may be added through the second raw material feed port together with the thermoplastic resin B. Particularly, the preliminary blending of the oxidation inhibitor C into the thermoplastic resin B at the manufacturing stage of the thermoplastic resin B leads to the suppression of the degradation of the thermoplastic resin B at the time of manufacturing the thermoplastic resin B per se and hence, the preliminary blending is more preferable. Here, although it is possible to add the oxidation inhibitor C through the first raw material feed port together with the thermoplastic resin A, when the oxidation inhibitor C is either in a liquid form or in a powder form, the oxidation inhibitor C may hinder the reliable melting of the thermoplastic resin A and hence, such an addition of the oxidation inhibitor C is not preferable.

As the combination of the above-mentioned thermoplastic resin A, thermoplastic resin B and the oxidation inhibitor C, the combination in which polyethylene terephthalate resin (PET) is used as the thermoplastic resin A, acid-modified polyethylene is used as the thermoplastic resin B and vitamin E (VE) is used as the oxidation inhibitor may be considered.

Further, the combination in which isophthalic acid copolymer PET resin is used as the thermoplastic resin A, ionomer resin is used as the thermoplastic resin B and vitamin E (VE) is used as the oxidation inhibitor C may be also considered.

### [Other components D used in the present invention]

Further, according to the present invention, besides the above-mentioned thermoplastic resin A, thermoplastic resin B and the oxidation inhibitor C, other components may be blended.

For example, as other components D, inorganic powder, inorganic fillers, organic fillers, coloring agents and silicone are named. As specific examples, one kind or two or more kinds of substances selected from a group including diatomaceous earth, carbon, talc, mica, glass beads, glass flakes, glass fibers, carbon fibers, Kevler fibers, stainless steel fibers, copper fibers are named.

Further, as other components, an anti-blocking agent such as amorphous silica, pigment such as titanium oxide, various kinds of electrification prevention agents and lubricants are named.

These components D may be fed through the first feed port together with the thermoplastic resin A in a form of a master batch which uses the components per se or the thermoplastic resin A as base material. Further, these components D may be fed through the second feed port together with the thermoplastic resin B. However, from a viewpoint that the melting of the thermoplastic resin A should not be hindered, it is preferable to feed these components D through the second feed port.

As the metal material which is coated with the blend resin obtained by the present invention, followings are named.

### [Metal material]

As a metal material substrate, various kinds of surface treatment steel sheet or a light metal sheet made of aluminum or the like can be used. As the surface treatment steel sheet, it is possible to use a sheet which is obtained by making a cold rolled steel sheet subjected to a secondary cold rolling after annealing and performing one, two or more kinds selected from a group of surface treatments consisting of zinc plating, tin plating, nickel plating, nickel-tin plating, electrolytic chromic-acid treatment and chromic acid treatment.

As a preferred example of the surface treatment steel sheet, an electrolytic chromic acid treatment sheet is named. It is particularly preferable to use the electrolytic chromic acid treatment sheet which includes a metal chromium layer of 10 to 20 mg/m² and a chromium oxide layer of 1 to 50 mg/m² (metal conversion). This electrolytic chromic acid treatment sheet exhibits the excellent combination of the coating adhesive property and the corrosion resistance.

Another preferred example of the surface treatment steel sheet is a hard tin sheet having a tin plating amount of 0.5 to 11.2 g/m². It is preferable that the tin sheet is subjected to the chromic acid treatment or the chromic acid/phosphating treatment such that the chromium amount becomes 1 to 30 mg/m² in metal chromium conversion.

Still another preferred example of the surface treatment steel sheet is an aluminum coated steel sheet to which aluminum plating or the aluminum pressure bonding is applied.

As the light metal sheet, an aluminum sheet or an aluminum alloy sheet can be used. The aluminum alloy sheet which exhibits the excellent corrosion resistance and workability has the composition consisting of 0.2 to 1.5 weight% of Mn, 0.8 to 5 weight% of Mg, 0.25 to 0.3 weight% of Zn, 0.15 to 0.25 weight% of Cu and Al as the balance.

It is preferable that these light metal sheets are also subjected to the chromic acid treatment or the chromic acid/phosphating treatment in which a chromium amount is 20 to 300 mg/m² in metal chromium conversion. The surface treatment applied to the light metal sheet can be performed by using water-soluble phenol resin together.

Although the thickness of an element sheet of the metal sheet, that is, the thickness of a bottom portion of a can may differ depending on the kind of metal and the use or size of a seamless can, it is preferable to set the thickness to 0.10 to 0.50 mm. Here, with respect to the surface treatment steel sheet, it is preferable to set the thickness to 0.10 to 0.30 mm, while with respect to the light metal sheet, it is preferable to set the thickness to 0.15 to 0.40 mm.

### [Extruding device]

An embodiment of the present invention is explained in conjunction with drawings hereinafter.

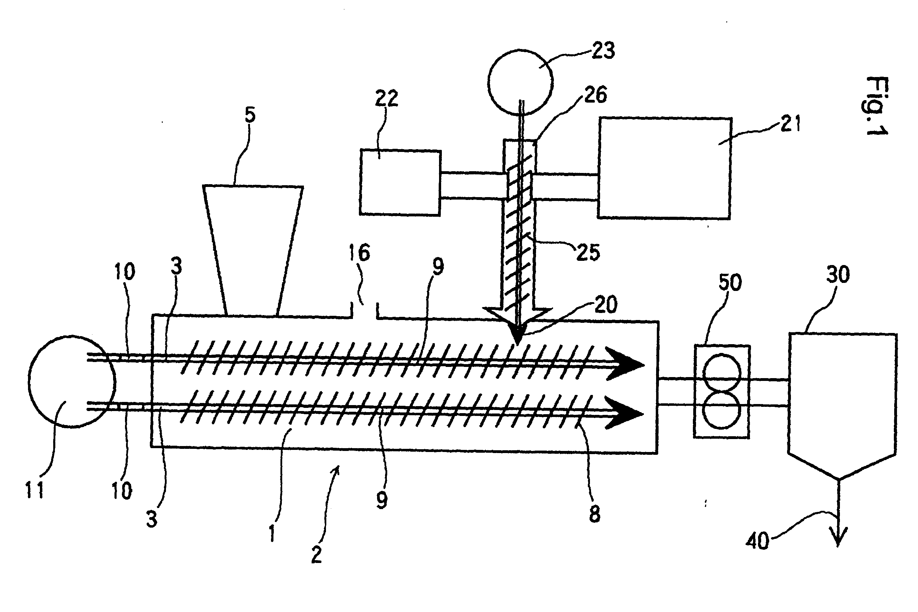

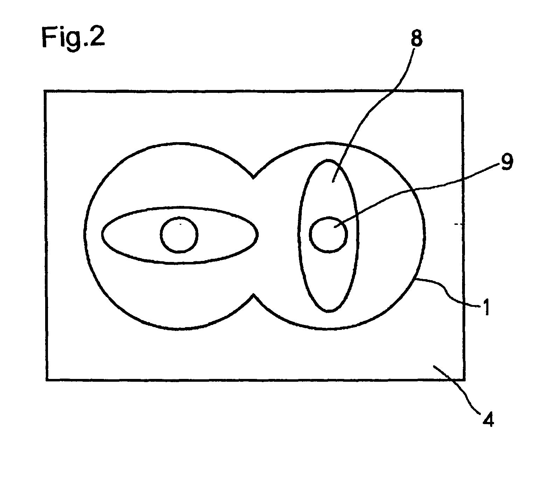

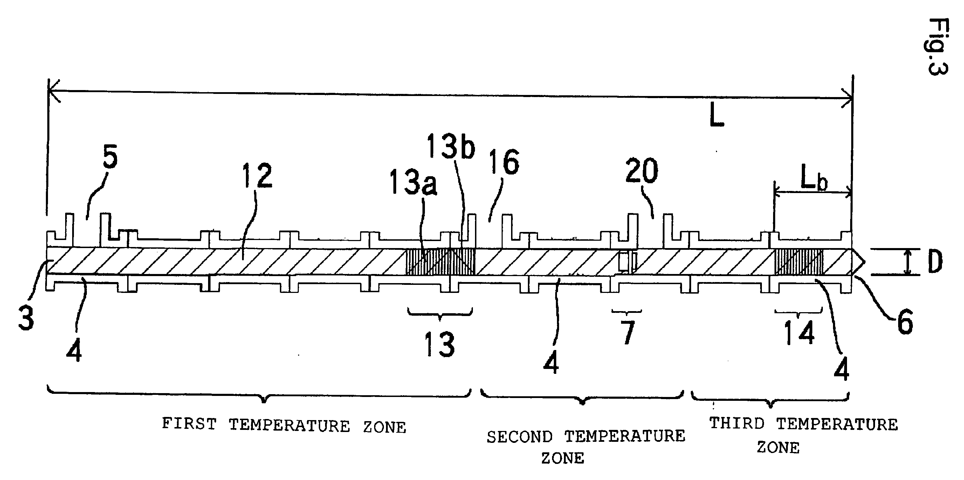

Fig. 1 is a schematic view showing an overall constitution of the extruding device adopted by this embodiment. Fig. 2 is a schematic view showing the cross-sectional structure of an extruder portion having a biaxial extruding function. Fig. 3 is a schematic view showing the inner structure of the extruder shown in Fig. 1.

As shown in Fig. 1 and Fig. 2, an extruder 2 adopted by this embodiment includes a barrel 4 in which an eye-glasses-like barrel hole 1 is formed and two screws 3 which are arranged parallel to each other are rotatably inserted into the barrel hole 1.

Further, as shown in Fig. 3, the barrel 4 of the extruder 2 is constituted by connecting a plurality of barrels having a fixed length in an axial direction. A first raw material feed port 5 is formed in an upper surface of the most upstream barrel 4a and the thermoplastic resin A is fed into the barrel 4 through the first raw material feed port 5. Further, a degassing port 16 is formed in an upper surface of the intermediate barrel 4b so as to eliminate or remove oligomer and the excessive moisture in the resin by degassing.

Further, as shown in Fig. 1 and Fig. 3, a second raw material feed port 20 is formed in an upper surface of the downstream barrel 4c and raw material storage vessels 21, 22 for feeding blend resin are separately mounted on the second raw material feed port 20. The thermoplastic resin B is mixed and fed to the second raw material feed port 20 by an agitator 25 provided with a driving part 23. A compactor 26 which constitutes a housing of the agitator 25 is provided with a water cooling mechanism so that the compactor 26 has a function of preventing a phenomenon that the thermoplastic resin B is softened by heat transferred from the extruder 2 and hence, the feeding of the resin B becomes difficult. Further, it is also possible to feed nitrogen when necessary. The feeding of nitrogen has an advantageous effect that the degradation of resin by oxidation can be suppressed. A material discharge part 6 is connected to a front end of the most downstream barrel 4d so that the resin which is melted and blended by the extruder 2 is conveyed from the material discharge port 6 to a T die 30 by way of a geared pump 50 and then is extruded from the T die 30 as a resin film 40.

Further, as shown in Fig. 1 and Fig. 2, two respective screws 3 are constituted by mounting screw segments 8 having a given shape on spline shafts 9 by a spline fitting. The spline shafts 9 are connected with a rotation driving device 11 by way of coupling shafts 10.

As shown in Fig. 3, each screw 3 is constituted of a full flight part 12 which conveys resin to be mixed to the downstream, a first seal part 13, a second seal part 7 and a mixing part 14.

In this embodiment, the first seal part 13 is constituted of feeding kneading discs 13a which are formed by overlapping a plurality of disc-like segments which have a cross-sectional shape shown in Fig. 2 and have a phase such that a propulsion force in the axial direction works on the resin along with the rotation of the screw 3 and reverse-feeding kneading discs 13b which are formed by overlapping a plurality of disc-like segments which also have a phase such that a return force works on the resin along with the rotation of the screw 3. The reverse-feeding kneading discs 13b exhibit the resistance against the flow of the resin. That is, the reverse-feeding kneading discs 13 enhances the resin filling ratio of the first seal part 13 so that the action of the feeding kneading discs 13a becomes more effective whereby the thermoplastic resin A can be completely melted.

By also arranging segments which have resistance against the flow of resin and have a function of enhancing the resin filling ratio in the vicinity of the second seal part 7 in the second sealing part 7, the segments perform a function of resin sealing which is necessary at the time of performing degassing from the degassing port 16 arranged between the first and second seal parts 13, 7. Here, it is enough for the second seal part 7 so long as the second seal part 7 performs the function of sealing resin. Accordingly, from a viewpoint of performing the sealing while suppressing the undesired heating of the thermoplastic resin A, in place of using the kneading discs in the first sealing portion, it is preferable to use sealing rings having a circular-disc cross-sectional shape with suitable clearance so long as the resin sealing is ensured with respect to the barrel hole diameter.

The mixing part 14 is constituted of feeding kneading discs and performs a function of blending the thermoplastic resin A which is filled into the front end of the extruder, the thermoplastic resin B and the oxidation inhibitor C which is added when necessary in an optimum state. It is needless to say that segments other than the kneading discs can be also used so long as other segments perform the function of properly blending the thermoplastic resin A, the thermoplastic resin B and the oxidation inhibitor C which is added when necessary.

It is preferable that a ratio L/D between the total length (L) of the extruder 2 and the diameter (D) of the screw 3 falls in a range of 20 to 40. When the ratio L/D is less than 20, not only the zone length which is necessary for melting the thermoplastic resin A becomes insufficient, but also the zone length which is necessary for blending the thermoplastic resin A and the thermoplastic resin B becomes insufficient. Further, it is difficult to ensure the zone necessary for performing the degassing and the feeding of the thermoplastic resin B. Accordingly, the setting of such a ratio is not preferable. On the other hand, when the ratio L/D exceeds 40, the dwelling time of the thermoplastic resin is prolonged so that the thermoplastic resin is liable to be degraded. Accordingly, the setting of such a ratio is also not preferable.

The ratio Lb/D between the length (Lb) of the blending zone and the diameter (D) of the screw 3 falls in a range of 0.5 to 5.0. When the ratio is less than 0.5, the mixing part 14 cannot perform the sufficient mixing while, to the contrary, when the ratio exceeds 5.0, the mixing part 14 performs the mixing excessively thus leading to the generation of the undesired heat, the worsening of the scattered state and the generation of degraded substances.

From a viewpoint of suppressing the lowering the molecular weight and removing the undesired oligomer by performing the reliable degassing, it is preferable to set the pressure of the degassing mechanism to a pressure equal to or below the atmospheric pressure, preferably a pressure equal to or less than -0.05 MPa, more preferably a pressure equal to or less than -0.1 MPa at the degassing port 16 of the extruder 2.

In performing the mixing, although it is needless to say that the size (screw diameter D) of the extruder is to be properly selected in accordance with an amount of polymer blend resin which is actually extruded, it is also important to properly set the rotational speed of the screws . In general, here observed is a tendency that the higher the rotational speed of the screws, the blending is enhanced. However, when the rotational speed of the screws is excessively high, the resin temperature is excessively elevated due to the generation of heat caused by blending and the like thus giving rise to the generation of the degraded substances and the worsening of blending. Accordingly, the excessive rotational speed is not preferable.

It is preferable that the melting/blending temperature (temperature zone) is guided from the high temperature to the low temperature in the direction from the first raw material feed port 5 for feeding the resin material toward the downstream discharge port. The reason that the temperature of the upstream part of the extruder is set to the high temperature is to completely melt the thermoplastic resin A fed through the first feed port 5. When the temperature of the upstream part of the extruder is low, there arises a problem that the non-melted substances of the thermoplastic resin A are generated. On the other hand, it is preferable to set the temperature of the downstream part of the extruder to a temperature lower than the temperature of the upstream part of the extruder. The reason that the temperature of the downstream part of the extruder is set to the low temperature is to take away the excessively generated heat due to blending thus reducing the generation of degraded substances and scattering them more uniformly. That is, when the temperature of the downstream part is high, the degraded substances derived from the thermoplastic resin B are generated. Accordingly, it is not preferable to set the temperature of the downstream part to the high temperature.

Further, from a viewpoint of the acquisition of the more favorable blending state, it is preferable to divide the temperature zone of the upstream part of the extruder into a zone for melting the thermoplastic resin A and a zone for adjusting the temperature and the viscosity of the thermoplastic resin A into the state which is suitable for mixing the thermoplastic resin A and the thermoplastic resin B.

To be more specific, the zone which ranges from the first raw material feed port 5 through which the thermoplastic resin A is fed to the extruder to a position immediately before the degassing port 16 is set as the first zone. With respect to the melting point Tm of the thermoplastic resin A, it is preferable to set the temperature of this zone to Tm + 20 degree centigrade to Tm + 50 degree centigrade. Then, the zone which is extended from the degassing port 16 to the second raw material feed port is set as the second zone. With respect to the melting point Tm of the thermoplastic resin A, it is also preferable to set the temperature of this zone to Tm - 20 degree centigrade to the Tm + 50 degree centigrade. Due to such division of zones and temperature setting, the above-mentioned generation of non-melted substances of the thermoplastic resin A can be suppressed and the viscosity of the thermoplastic resin A for blending with the thermoplastic resin B can be properly adjusted.

Further, with respect to the melting point Tm of the thermoplastic resin A, it is preferable to hold the zone (third zone) disposed at the downstream of the second raw material feed port 20 for feeding the thermoplastic resin B at Tm - 40 degree centigrade to Tm + 10 degree centigrade from a viewpoint of suppressing the generation of degraded substances of the thermoplastic resin B and obtaining the favorable mixing state.

As shown in Fig. 1, it is preferable to interpose the geared pump 50 between the front end of the extruder and the T die 40. The geared pump 50 has not only a function of extruding a fixed amount of resin at a fixed pressure but also has a function of setting the resin pressure before the geared pump (front end portion of the extruder) to a proper value irrespective of the resin back pressure in a resin piping and the T die portion and hence, it is possible to control an amount of resin filled in the front end portion of the extruder whereby it is possible to properly adjust the blending state. That is, in a case which uses no geared pump 50, when the resin back pressure at the T die 40 portion becomes high, an amount of resin filled in the front end portion of the extruder is excessively increased thus giving rise to the degradation and the insufficient dispersion due to the excessive blending. To the contrary, in a case in which the back pressure is not applied, the resin is hardly filled in the blending portion 14 provided at the front end of the extruder thus giving rise to an unfavorable situation that the blending becomes insufficient.

The method for extruding polymer blend resin according to the present invention is also effective as means for producing blending pellets (intermediate product) for forming films. That is, the blend resin is once blended and pelletized and, thereafter, the blend resin is melted again using another extruder thus forming films.

Although the polymer blend resin produced by the extruding method of the present invention may be applied to the metal substrate as a single-layer film, it is possible to apply the polymer blend resin in a two layered constitution in which the polymer blend resin is disposed at the substrate side and a single composition film made of the thermoplastic resin A is disposed at a surface layer side. Further, it is also possible to apply the polymer blend resin in a three or more layered constitution.

With the provision of plural layers having the surface layer, it is possible to suppress or prevent the thermoplastic resin B and the oxidation inhibitor C from affecting the properties of contents such as flavor.

Further, the blend resin obtained by the extruding method of the present invention also has applications other than the resin-coated metal cans produced by the previously-mentioned working. For example, the blend resin is applicable to three piece cans which bond side seams thereof by welding, metal lids such as easy-open lids and metal caps.

### [Examples]

The present invention is further explained in detail in conjunction with examples of the present invention and comparison examples.

### (Example 1)

Using the extruding device having the facility constitution shown in Fig. 1 in which kneading disks (blending zone: Lb/D = 2) whose twisting angle is set to 45 degrees for feeding are mounted in the blending zone and the twin screw extruder having the screw constitution (whole: L/D = 31.5) shown in Fig. 3 and having the rotation of the same direction is mounted on other portions, polymer blend resin films having composition X shown in Table 2were produced and the evaluation was performed using these films as samples.

Here, among the composition X, the thermoplastic resin Awas fed through the first raw material port and the thermoplastic resin B was fed through the second raw material port. Along with such operations, the reduction of pressure and the degassing were performed at a pressure of - 0.1 Mpa through the degassing port. Further, the temperature conditions of respective zones were set as shown in Table 2.

The polymer blend resin films produced by the extruding method of the present invention were films which exhibit the small generation of the substances, maintains the high molecular weight and exhibit the favorable appearance. Further, when the films were laminated to the metal sheets using the above-mentioned method and the evaluation of the shock resistance was performed, a favorable result that the average current amount was 0.08 mA was obtained.

### (Example 2)

Compared to the example 1, except for conditions that the produced blend resin has the composition Y and the thermoplastic resin B and the oxidation inhibitor C are fed through the second raw material feed port, the polymer blend resin films were produced and the evaluation was performed in the same manner as the example 1.

As a result, these films exhibited a small number of substances and the high molecular weight. Further, these films exhibited the favorable dispersion, the favorable film appearance and the favorable shock resistance.

### (Example 3)

Except for a condition that an extruder having Lb/D of the blending zone set to 4.0 is used, the polymer blend resin films having the composition Y were prepared and the evaluation was performed in the same manner as the example 2. As a result, these films also exhibited the favorable dispersion, the favorable film appearance and the favorable shock resistance.

### (Example 4)

Compared to the example 2, except for a condition that the temperature of the first zone is set to 285 degree centigrade, the polymer blend resin films having the composition Y were produced and the evaluation was performed in the same manner as the example 2.

As a result, these films exhibited a small number of substances, and also exhibited the favorable dispersion, the favorable film appearance and the favorable shock resistance.

### (Example 5)

Compared to the example 2, except for a condition that the temperature of the second zone is set to 240 degree centigrade and the temperature of the third zone is set to 210 degree centigrade, the polymer blend resin films having the composition Y were produced and the evaluation was performed in the same manner as the example 2.

As a result, these films also exhibited the favorable number of substances, the favorable film appearance and the favorable shock resistance.

### (Comparison example 1)

Compared to the example 1, except for conditions that the feed position of the thermoplastic resin B is set to the first raw material feed port (that is, the thermoplastic resin B being fed together with the thermoplastic resin A) and the degassing is performed at two positions corresponding to the degassing port and the second raw material feed port, the polymer blend resin films having the composition X were produced and the evaluation was made in the same manner as the example 1.

As a result, the films which were produced by the extruding method in which the feed position of the thermoplastic resin B does not satisfy the range of the present invention exhibited inferior values with respect to both of the number of substances and the molecular weight compared to those of the example 1.

### (Comparison example 2)

Compared to the example 1, except for conditions that the thermoplastic resin B was fed at a position corresponding to the degassing port and the degassing is performed at a position corresponding to the second raw material feed port, the polymer blend resin films having the composition X were produced and the evaluation was made in the same manner as the example 1.

As a result, in the same manner as the comparison example 1, the films also exhibited inferior values with respect to the number of substances and the molecular weight compared to those of the example 1.

### (Comparison example 3)

Except for a condition that the blending zone is not provided to the extruder, the films were produced under the same conditions with the example 2 and the resin coated metal sheets were produced. As a result, the particle size of ionomer was large due to the insufficient blending and hence, the dispersion was insufficient. The film appearance was also unfavorable since the stripe like irregularities were found. Further, the shock resistance was also insufficient.

### (Comparison example 4)

Except for a condition that the length of the blending zone in the extruder is set to Lb/D= 6.0, the films were produced under the same condition with the example 2 and resin coated metal sheets were produced. Although the dispersion was fine and hence favorable, the film appearance was unfavorable since the irregularities and surface coarseness were found. Further, the shock resistance was also insufficient.

### (Comparison example 5)

Except for conditions that the set temperature of the first temperature zone is 250 degree centigrade and the set temperature of the second temperature zone is set to 240 degree centigrade, the films were produced in the same manner as the example 2 and the resin coated metal sheets were produced.

Although the film appearance and the shock resistance were favorable, the example 5 has a drawback that the number of substances is large. Particularly, since the set temperature of the first temperature zone was below the range of the present invention, non-melted substances of PET was considerably present.

### (Comparison example 6)

Except for a condition that the set temperatures of the second and the third temperature zones were set to 280 degree centigrade, the films were produced in the same manner as the example 2 and the resin coated metal sheets were produced.

The films exhibited the unfavorable film appearance and the shock resistance. Further, the number of substances of a relatively large size which are considered to be degraded substances of the thermoplastic resin B was outstanding.

Following evaluations were performed with respect to the above-mentioned examples and comparison examples.

### [Evaluation method]

### 1. Evaluation of substances

The blend resin film having a thickness of 30 µm was exposed to a fluorescent lamp of 30W and the substances having diameter φ of not less than 50 µm which are present in a square area with each side of 150 mm were counted with naked eyes. The substances were counted without segregating any one of degraded substances, chars, gels, fish eyes and the like. Although it is desirable that the substances are small in number, it was estimated favorable when the number of substances per square area with each side of 150 mm is not more than 150.

### 2. Evaluation of molecular weight

The extruded polymer blend resin was dissolved in HFIP (hexa-fluoro-iso-propanol) which is a solvent for PET and the average molecular weight Mw of PET component was obtained in an ordinary method using a GPC (Gel Permeation Chromatography) .

### 3. Evaluation of dispersion

The produced film was remelted and then a resin block obtained by solidifying the remelted film was sliced using a microtome and the observation of dispersion was performed using an electron microscope. It was evaluated favorable when the dispersion particle size of the ionomer is small (approximately 1 µm) and uniform.

The film whose dispersion particle size is large or the film whose dispersion particle size is non-uniformbrings about the stripe-like irregularities and hence, these films are not favorable.

### 4. Evaluation of film appearance

The appearance of the produced films was evaluated with naked eyes. It was evaluated unfavorable when the irregularities or the surface coarseness occurs. When the irregularities are generated, the film thickness becomes non-uniform and hence, there arises a drawback that the forming failure occurs at the time of can forming. Further, when the surface coarseness occurs, the adhesive property of the film with the metal is hindered and hence, there arises a drawback that the corrosion occurs depending on the content of a canned product.

### 5. Production of resin-coated metal sheet

The produced blend resin films were laminated with heat to both surfaces of a TFS steel sheet (sheet thickness: 0.18 mm, metal chromium amount: 120 mg/m², chromium hydration amount: 15mg/m²) and, immediately thereafter, the film-laminated steel sheet was subjected to water quenching thus obtaining the resin-coated metal sheet.

The resin-coated metal sheet which was obtained in the above-mentioned manner was subjected to the impact overhang working. That is, a coating surface to be subjected to evaluation of the resin-coated metal sheet was brought into contact with a silicon rubber having a thickness of 3 mm and a hardness of 50 degrees at a temperature of 5 degrees centigrade under wetting atmosphere. Then, a steel ball having a diameter of 5/8 inches was placed on a surface of the metal sheet disposed opposite to the coating surface by way of the steel sheet, and a weight of 1 kg was dropped from the height of 40 mm to perform the impact overhang working. The degree of resin coating cracks of the shock working portion was measured using a current value having a voltage of 6.0 V and the evaluation of the impact resistance was performed based on the average of sampling performed six times.

The result of evaluation was made such that it is evaluated favorable when the average current value assumes the relationship: average current value < 0.1 mA and it is evaluated unfavorable when the average current assumes the relationship: average current value > 0.1 mA.

Table 1 shows the respective compositions of the polymer blend resin used in the examples and the comparison examples of the present invention and the physical properties of the copolymer of PET-isophthalic acid 5 mol% and the inomer altogether.

**Table 1**

| | thermoplastic resin A | | | thermoplastic resin B | | | | oxidation inhibitor C | |
|---|---|---|---|---|---|---|---|---|---|
| | resin | Wt% | melting point (Tm1) | resin | Wt % | melting point (Tm2) | Tm1-Tm2 | resin | Wt% |
| Composition X | PET-isophtalic acid 5 % mol copolymer | 85 | 240 | ionomer MFR1.0 | 15 | 90 | 150 | - | - |
| Composition Y | PET-isophtalic acid 5 % mol copolymer | 81.5 | 240 | ionomer MFR1.0 | 18 | 90 | 150 | tocopherol | 0.5 |

| | | | | | | | | | |
|---|---|---|---|---|---|---|---|---|---|
| *PET-physical value of isophtalic acid 5 % mol copolymer IV: 0.9, pellet molecular weight: 78000, melting point: 240 degree centigrade | | | | | | | | | |

In Table 2, the conditions for the method for extruding polymer blend resin used in the examples of the present invention and in the comparison examples are summarized.

**Table 2**

| | blend composition | resin A feed position | resin B feed position | degassing position | Lb/D of blending zone | temperature of first zone (T1) | size relationship | temperature of second zone (T2) | size relationship | temperature of third zone (T3) |
|---|---|---|---|---|---|---|---|---|---|---|
| example 1 | X | first raw material feed port | second raw material feed port | degassing port | 2 | 270°C | = | 270°C | > | 240°C |
| example 2 | Y | | | | | | | | | |
| example 3 | Y | | | | 4 | | | | | |
| example 4 | | | | | 2 | 285°C | = | 270°C | > | 240°C |
| example 5 | | | | | 2 | 270°C | > | 240°C | > | 210°C |
| comparison example 1 | X | first raw material feed port | first raw material feed port | degassing port + position corresponding to second raw material feed port | 2 | 270°C | = | 270°C | > | 240°C |
| comparison example 2 | | | position corresponding to degassing port | position corresponding to second raw material feed port | 2 | 270°C | = | 270°C | > | 240°C |
| comparison example 3 | Y | | second raw material feed port | degassing port | non | 250°C | = | 270°C | > | 240°C |
| comparison example 4 | | | | | 6 | | | | | |
| comparison example 5 | | | | | 2 | 250°C | > | 240°C | = | 240°C |
| comparison example 6 | | | | | | 270°C | < | 280°C | = | 280°C |

Table 3 shows the evaluation result of the examples of the present invention and the comparison examples altogether.

**Table 3**

| | number of substances (pieces / 150 square mms) | blend resin molecular weight Mw | dispersion | film appearance | shock resistance |
|---|---|---|---|---|---|
| example 1 | 141 | 60300 | favorable | favorable | favorable |
| example 2 | 94 | 61100 | favorable | favorable | favorable |
| example 3 | 110 | 59400 | favorable | favorable | favorable |
| example 4 | 88 | 60000 | favorable | favorable | favorable |
| example 5 | 91 | 60400 | favorable | favorable | favorable |
| comparison example 1 | 263 (large) | 47500 | unfavorable (particle size non-uniform) | unfavorable (coarse surface) | unfavorable |
| comparison example 2 | 218 (large) | 49800 | unfavorable (particle size non-uniform) | unfavorable (coarse surface) | unfavorable |
| comparison example 3 | 162 | 60700 | unfavorable (particle size excessively large) | unfavorable (irregularities) | unfavorable |
| comparison example 4 | 193 | 55300 | favorable | unfavorable (irregularities, coarse surface) | unfavorable |
| comparison example 5 | 250 (large) | 57200 | favorable | favorable | favorable |
| comparison example 6 | 550 (large) | 52800 | unfavorable | unfavorable (irregularities, coarse surface) | unfavorable |

As has been described heretofore, according to the extruding method of the present invention, in extruding the resin obtained by blending the resins which differ in the melting temperature or the softening temperature, it is possible to make the blend resin uniformly dispersed. Further, there is no possibility of overheating and decomposition of the low-melting-point resin components among the blend resin components and hence, the lowering of the molecular weight of the whole blend resin can be prevented whereby the properties of the film can be enhanced.

In this manner, according to the extruding method of the present invention, it is possible to produce the high quality films made of polymer blend resin which are applicable to the resin-coated metal cans or the like which are manufactured through an extremely stringent working such as drawing, deep drawing, bend-elongation by drawing, stretching or ironing.

Further, with respect to the resin-coated metal cans or the like which are formed of the resin-coated metal sheet on which resin films produced by the extruding method of the present invention is coated and are formed using ironing or the like, the resin coating film hardly receives damages in the forming process and hence, the exposure of the background metal can be prevented whereby it is possible to obtain an advantageous effect that there is no fear of the elution of metal from exposed portions or the corrosion of the background metal.

## Claims

1. A method for extruding polymer blend resin comprising.
a) in a first zone of a twin screw extruder, feeling thermoplastic resin A to the extruder through a first raw material feed port (5),
plasticizing the thermoplastic resin A in a molten state, and
subjecting it to degassing under reduced pressure;
b) in a second zone extending downwardly from the position of degassing under reduced pressure to a second raw material feed port (20), feeding thermoplastic resin B whose melting temperature or softening temperature is lower than a melting temperature or a softening temperature of the thermoplastic resin A to the extruder through a second raw material feed port (20);
c) in a blending zone (Lb), which is located at the end of a third zone extending downwardly from the second raw material feed port (20) to the end of the extruder and which contains a mixing part (14), blending the thermoplastic resin A and the thermoplastic resin B; and
d) extruding the blend resin from the extruder,
wherein, assuming Lb as a length of the blending zone and D as a screw diameter of the extruder, the ratio of Lb/D is 0.5 to 5.0,
wherein, assuming a temperature set in the first zone as T1, a temperature set in the second zone as T2 and a temperature set in the third zone as T3, a relationship T1 ≥ T2 > T3 is established among the temperatures T1, T2 and T3, and
wherein the thermoplastic resin A is a polyester resin and the thermoplastic resin B is an ethylene-based polymer.

2. A method for extruding polymer blend resin according to claim 1, wherein with respect to a melting point Tm of the thermoplastic resin A, the temperature T1 in the first zone is set to Tm + 20 degree centigrade to Tm + 50 degree centigrade, the temperature T2 in the second zone is set to Tm - 20 degree centigrade to Tm + 50 degree centigrade, and the temperature T3 in the third zone is set to Tm - 40 degree centigrade to Tm + 10 degree centigrade.

3. A method for extruding polymer blend resin according to claim 1 or 2, wherein after the thermoplastic resin A and the thermoplastic resin B are blended, the blend resin is extruded through a geared pump and a T die in a film shape.

4. A method for extruding polymer blend resin according to any one of preceding claims 1 to 3, wherein a blending ratio by weight of the thermoplastic resin A and the thermoplastic resin B is set to B/(A + B) = 0.05 to 0.5.

5. A method for extruding polymer blend resin according to any one of preceding claims 1 to 4, wherein the thermoplastic resin A is resin containing polyethylene terephthalate as a major component and the thermoplastic resin B is acid-modified polyethylene resin.

6. A method for extruding polymer blend resin according to any one of preceding claims 1 to 5, wherein an oxidation inhibitor C and/or other component D are added to the polymer blend resin.

## Patentansprüche

1. Ein Verfahren zum Extrudieren eines Polymerharzgemisches, umfassend:
a) in einem ersten Bereich eines Doppelschneckenextruders, Beschicken des Extruders mit thermoplastischem Harz A durch eine erste Rohmaterial-Beschickungsöffnung (5),
Weichmachen des thermoplastischen Harzes A in einem geschmolzenen Zustand, und Durchführung einer Entgasung davon unter reduziertem Druck;
b) in einem zweiten, stromabwärts von der Stelle der Entgasung unter reduziertem Druck sich zu einer zweiten Rohmaterial-Beschickungsöffnung (20) erstreckenden Bereich, Beschicken des Extruders mit thermoplastischem Harz B, dessen Schmelztemperatur oder Erweichungstemperatur niedriger ist als eine Schmelztemperatur oder eine Erweichungstemperatur des thermoplastischen Harzes A durch eine zweite Rohmaterial-Beschickungsöffnung (20);
c) in einem Mischbereich (Lb), welcher sich am Ende eines dritten, stromabwärts von der zweiten Rohmaterial-Beschickungsöffnung (20) sich zum Ende des Extruders erstreckenden Bereichs befindet und welcher ein Mischungsteil (14) enthält, Mischen des thermoplastischen Harzes A und des thermoplastischen Harzes B; und
d) Extrudieren des Harzgemisches aus dem Extruder,
wobei, voraussetzend, dass Lb als eine Länge des Mischbereichs und D als ein Schneckendurchmesser des Extruders, das Verhältnis von Lb/D 0,5 bis 5 beträgt, wobei, voraussetzend, dass eine Temperatur in dem ersten Bereich als T1 eingestellt ist, eine Temperatur in dem zweiten Bereich als T2 eingestellt ist und eine Temperatur in dem dritten Bereich als T3 eingestellt ist, ein Verhältnis T1 ≥ T2 > T3 zwischen den Temperaturen T1, T2 und T3 eingerichtet wird, und wobei das thermoplastische Harz A ein Polyesterharz ist und das thermoplastische Harz B ein Polymer auf Ethylenbasis ist.

2. Ein Verfahren zum Extrudieren eines Polymerharzgemisches gemäß Anspruch 1, wobei in Hinblick auf einen Schmelzpunkt Tm des thermoplastischen Harzes A, die Temperatur T1 in dem ersten Bereich auf Tm + 20 Grad Celsius bis Tm + 50 Grad Celsius eingestellt ist, die Temperatur T2 in dem zweiten Bereich auf Tm - 20 Grad Celsius bis Tm + 50 Grad Celsius eingestellt ist, und die Temperatur T3 in dem dritten Bereich auf Tm - 40 Grad Celsius bis Tm + 10 Grad Celsius eingestellt ist.

3. Ein Verfahren zum Extrudieren eines Polymerharzgemisches gemäß Anspruch 1 oder 2, wobei, nachdem das thermoplastische Harz A und das thermoplastische Harz B vermischt sind, das Harzgemisch durch eine Zahnradpumpe und eine T-Düse in Form einer Folie extrudiert wird.

4. Ein Verfahren zum Extrudieren eines Polymerharzgemisches gemäß einem der vorhergehenden Ansprüche 1 bis 3, wobei ein Mischverhältnis nach Gewicht des thermoplastischen Harzes A und des thermoplastischen Harzes B auf B/(A+B) = 0,05 bis 0,5 eingestellt wird.

5. Ein Verfahren zum Extrudieren eines Polymerharzgemisches gemäß einem der vorhergehenden Ansprüche 1 bis 4, wobei das thermoplastische Harz A ein Harz ist, welches Polyethylentherephtalat als einen Hauptbestandteil enthält, und das thermoplastische Harz B ein säuremodifiziertes Polyethylen-Harz ist.

6. Ein Verfahren zum Extrudieren eines Polymerharzgemisches gemäß einem der vorhergehenden Ansprüche 1 bis 5, wobei ein Oxidationsinhibitor C und/oder eine andere Komponente D zu dem Polymerharzgemisch gegeben werden.

## Revendications

1. Procédé pour extruder une résine de type mélange de polymères comprenant :
a) dans une première zone d'une extrudeuse à deux vis, l'introduction d'une résine thermoplastique A dans l'extrudeuse par un premier orifice d'introduction de matière première (5), la plastification de la résine thermoplastique A dans un état fondu, et
son exposition à un dégazage sous pression réduite;
b) dans une seconde zone qui s'étend en aval de la position de dégazage sous pression réduite jusqu'à un second orifice d'introduction de matière première (20), l'introduction d'une résine thermoplastique B dont la température de fusion ou la température de ramollissement est inférieure à une température de fusion ou une température de ramollissement de la résine thermoplastique A dans l'extrudeuse par un second orifice d'introduction de matière première (20) ;
c) dans une zone de mélange (Lb), qui est située à l'extrémité d'une troisième zone qui s'étend en aval du second orifice d'introduction de matière première (20) jusqu'à l'extrémité de l'extrudeuse et qui contient une partie mélangeuse (14), le mélange de la résine thermoplastique A et de la résine thermoplastique B ; et
d) l'extrusion de la résine de type mélange depuis l'extrudeuse, où, en admettant que Lb est une longueur de la zone de mélange et D est un diamètre de vis de l'extrudeuse, le rapport Lb/D est 0,5 à 5,0,
où, en admettant qu'une température fixée dans la première zone est T1, une température fixée dans la seconde zone est T2 et une température fixée dans la troisième zone est T3, une relation T1 ≥ T2 > T3 est établie parmi les températures T1, T2 et T3, et
où la résine thermoplastique A est une résine de polyester et la résine thermoplastique B est un polymère à base d'éthylène.

2. Procédé pour extruder une résine de type mélange de polymères selon la revendication 1 où, par rapport à un point de fusion Tm de la résine thermoplastique A, la température T1 dans la première zone est fixée à Tm + 20 degrés centigrades à Tm + 50 degrés centigrades, la température T2 dans la seconde zone est fixée à Tm - 20 degrés centigrades à Tm + 50 degrés centigrades, et la température T3 dans la troisième zone est fixée à Tm - 40 degrés centigrades à Tm + 10 degrés centigrades.

3. Procédé pour extruder une résine de type mélange de polymères selon la revendication 1 ou 2 où, après que la résine thermoplastique A et la résine thermoplastique B sont mélangées, la résine de type mélange est extrudée par le biais d'une pompe à engrenage et d'une filière en T sous forme d'un film.

4. Procédé pour extruder une résine de type mélange de polymères selon l'une quelconque des revendications 1 à 3 précédentes où un rapport de mélange en poids de la résine thermoplastique A et de la résine thermoplastique B est fixé à B/(A + B) = 0,05 à 0,5.

5. Procédé pour extruder une résine de type mélange de polymères selon l'une quelconque des revendications 1 à 4 précédentes où la résine thermoplastique A est une résine contenant du polyéthylène téréphtalate comme composant majeur et la résine thermoplastique B est une résine de polyéthylène modifiée avec un acide.

6. Procédé pour extruder une résine de type mélange de polymères selon l'une quelconque des revendications 1 à 5 précédentes où un inhibiteur d'oxydation C et/ou un autre composant D sont ajoutés à la résine de type mélange de polymères.
